(19) Europäisches Patentamt
European Patent Office
Office européen des brevets

(11) Veröffentlichungsnummer: **0 111 237**
**A2**

# (12) EUROPÄISCHE PATENTANMELDUNG

(21) Anmeldenummer: **83111893.0**

(22) Anmeldetag: **28.11.83**

(51) Int. Cl.³: **H 01 M 4/60**
H 01 M 10/36

(30) Priorität: **04.12.82 DE 3244900**

(43) Veröffentlichungstag der Anmeldung:
**20.06.84 Patentblatt 84/25**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Naarmann, Herbert, Dr.**
**Haardtblick 15**
**D-6719 Wattenheim(DE)**

(72) Erfinder: **Koehler, Gernot, Dr.**
**Berner Weg 32**
**D-6700 Ludwigshafen(DE)**

(54) **Batterie oder elektrochemischer Speicher auf Basis von elektrochemisch oxidierbaren und/oder reduzierbaren Polymeren.**

(57) Die Erfindung betrifft Batterien oder elektrochemische Speicher, insbesondere Sekundär-Elemente, deren aktives Elektrodenmaterial der Kathode und/oder Anode aus mindestens einem elektrisch leitfähigen Polymeren mit einer elektrischen Leitfähigkeit größer als $10^{-2}$ $Ohm^{-1}$ $cm^{-1}$ gebildet wird, welches elektrochemisch oxidierbare und/oder reduzierbare Redox-Gruppen mit definierter Struktur eingebaut enthält, die mindestens zwei stabile und vorzugsweise reversibel ineinander überführbare Oxidationsstufen auszubilden vermögen.

EP 0 111 237 A2

Batterie oder elektrochemischer Speicher auf Basis von elektrochemisch oxidierbaren und/oder reduzierbaren Polymeren

Die Erfindung betrifft Batterien oder elektrochemische Speicher, insbesondere Sekundärelemente, deren aktives Elektrodenmaterial der Kathode und/oder Anode aus mindestens einem elektrisch leitfähigen und elektrochemisch oxidierbaren und/oder reduzierbaren Polymeren gebildet wird. Die erfindungsgemäßen Batterien und elektrochemischen Speicher besitzen bei geringem Gewicht eine hohe Energie- und Leistungsdichte und eine ausgezeichnete Stabilität.

In der US-PS 2 831 045 und der DE-AS 1 035 227 sind Primär- und Sekundärelemente beschrieben, die als Elektrodenmaterial Elektronenaustausch--Harze (Redox-Polymere) enthalten. Als geeignete Redox-Polymeren sind dabei Vinylhydrochinon-Polymerisate und Hydrochinon enthaltende Polykondensate, z.B. aus Phenol, Formaldehyd und Hydrochinon, genannt. Da diese Redox-Polymeren selber nicht elektrisch leitend sind, müssen sie als Elektrodenmaterial zusammen mit einem elektrisch leitfähigen Stoff, z.B. Graphit oder Metallstaub, eingesetzt werden. Derartige Batterie-Systeme sind nicht zufriedenstellend reproduzierbar (vgl. H.G. Cassidy and K.A. Kun "Oxidation-Reduction-Polymers (Redox-Polymers)", Polymer Rev., Vol. 11 (1965), Interscience Publishers, Seiten 255 und 256).

Aus der US-PS 3 660 163 sind Primär-Batterien mit einer Lithium-Anode, einem organischen Iod-charge-transfer-Komplex als Kathode sowie Lithiumiodid als Elektrolyt bekannt. Das hiernach einzusetzende Kathodenmaterial, wie z.B. Poly(vinylpyridinium)-Iodid, ist ebenfalls elektrisch nicht leitfähig, was die Leistungsstärke dieser Batterien stark herabsetzt. Zudem sind diese Batterien nicht wiederaufladbar.

Weiterhin sind bereits leichte Batterien hoher Energie- und Leistungsdichte beschrieben worden, die als aktives Elektrodenmaterial der Kathode und/oder Anode elektrisch hochleitfähige, p- oder n-dotierte konjugierte Polymere enthalten (vgl. EP-A2-36118; EP-A1-49970; EP-A1-50441). Die konjugierten Polymeren, unter denen das Polyacetylen besonders hervorgehoben ist, lassen sich reversibel elektrochemisch dotieren und entdotieren und besitzen in Abhängigkeit von dem Dotierungsgrad verschiedene Oxidationsgrade. Es hat sich jedoch gezeigt, daß derartige Batterien noch nicht allen Anforderungen, die man an Batterien stellt, voll genügen.

Aufgabe der vorliegenden Erfindung ist es, neue, leichte Batterien oder elektrochemische Speicher mit hoher Energie- und Leistungsdichte auf

Rss/Kl

Basis elektrochemisch oxidierbarer und/oder reduzierbarer Polymere zur Verfügung zu stellen, die die Nachteile der bekannten Batterien dieser Art nicht oder nur in geringerem Umfang aufweisen, die leicht herzustellen und zu handhaben sind, bei denen die üblichen und gebräuchlichen Elektrolyt-Systeme Anwendung finden können und die sich insbesondere durch gute Reproduzierbarkeit, hohe Stabilität und große Zyklenfestigkeit auszeichnen. Die neuen Batterien sollen bei hoher Leistungsstärke nur eine sehr geringe Neigung zur Selbstentladung haben.

Diese Aufgabe wird erfindungsgemäß durch Batterien gelöst, in denen das aktive Elektrodenmaterial der Kathode und/oder Anode aus mindestens einem elektrisch leitfähigen Polymeren mit einer elektrischen Leitfähigkeit größer als $10^{-2}$ $Ohm^{-1}$ $cm^{-1}$ gebildet wird, welches elektrochemisch oxidierbare und/oder reduzierbare Redox-Gruppen mit definierter Struktur eingebaut enthält, die mindestens zwei stabile und vorzugsweise reversibel ineinander überführbare Oxidationsstufen auszubilden vermögen.

Gegenstand der Erfindung sind demzufolge Batterien oder elektrochemische Speicher mit mindestens einer Kathode, mindestens einer Anode sowie mindestens einem Medium zum Stromtransport innerhalb der Batterien oder elektrochemischen Speicher, welche dadurch gekennzeichnet sind, daß das aktive Elektrodenmaterial der Kathode und/oder Anode aus mindestens einem elektrisch leitfähigen Polymeren mit einer elektrischen Leitfähigkeit größer als $10^{-2}$ $Ohm^{-1}$ $cm^{-1}$ gebildet wird, welches elektrochemisch oxidierbare und/oder reduzierbare Redox-Gruppen mit definierter Struktur eingebaut enthält, die mindestens zwei stabile und vorzugsweise reversibel ineinander überführbare Oxidationsstufen auszubilden vermögen.

Gegenstand der Erfindung sind des weiteren spezielle Ausgestaltungsformen dieser Batterien oder elektrochemischen Speicher entsprechend der nachfolgenden detaillierten Beschreibung.

Es hat sich gezeigt, daß in den erfindungsgemäßen Batterien der Entlade- und/oder Ladevorgang an den definierten Redox-Gruppen der als aktives Elektrodenmaterial verwendeten elektrisch leitfähigen Polymere stattfindet. Die elektrisch leitfähigen Polymeren werden überraschenderweise durch die Oxidation bzw. Reduktion beim Entladen und/oder Laden der Batterien nicht geschädigt, und das Elektrodenmaterial zeigt auch nach einer sehr hohen Anzahl von Entlade- und Ladevorgängen eine unverändert hohe Aktivität. Die Batterien haben eine hohe Energie- und Leistungsdichte, sie sind sehr leistungsstark, zeigen nur eine sehr geringe Selbstentladung, und es lassen sich mit ihnen auch nach einer großen Zahl von Entlade-/Auflade-Zyklen hohe Stromausbeuten erzielen. Die Batterien besitzen

eine sehr gute Reproduzierbarkeit und darüber hinaus auch eine sehr hohe Stabilität. Die elektrisch leitfähigen Polymeren mit den eingebauten, definierten Redox-Gruppen sind im allgemeinen vergleichsweise luftstabil und feuchtigkeitsunempfindlich und können somit einfach und leicht gehandhabt und unter den für die handelsüblichen Batterien gebräuchlichen Bedingungen angewandt und eingesetzt werden. Bei den erfindungsgemäßen Batterien kann es sich sowohl um Primärelemente als auch insbesondere um Sekundär-Elemente handeln, die in jeder geeigneten, beliebigen Form gestaltet werden können.

In den Batterien oder elektrochemischen Speichern wird erfindungsgemäß das aktive Elektrodenmaterial der Kathode und/oder Anode aus mindestens einem elektrisch leitfähigen Polymeren mit eingebauten Redox-Gruppen definierter Struktur gebildet. Diese Polymeren werden im folgenden auch der Einfachheit halber als Redox-Polymeren bezeichnet. Erfindungsgemäß können alle Redox-Polymeren eingesetzt werden, die eine elektrische Leitfähigkeit größer als $10^{-2}$ $Ohm^{-1}$ $cm^{-1}$, vorzugsweise gleich oder größer $10^{0}$ $Ohm^{-1}$ $cm^{-1}$, besitzen und deren Redox-Gruppen unter den Arbeitsbedingungen der Batterie mindestens zwei stabile, insbesondere reversibel ineinander überführbare Oxidationsstufen auszubilden vermögen. Bei diesen Redox-Polymerenn kann es sich sowohl um solche elektrisch leitfähigen Polymere handeln, die organische Redox-Gruppen als Seitengruppen an der Polymerhauptkette gebunden enthalten, als auch um Polymere, die die Redox-Gruppen in der Polymerhauptkette selber enthalten oder um polymere, verzweigte und/oder vernetzte Systeme mit eingebauten Redox-Gruppen definierter Struktur. Da die Redox-Gruppen für die Ladung und Entladung der erfindungsgemäßen Batterien von Bedeutung sind und somit die Energie- und Leistungsdichte dieser Batterien in unmittelbarem Zusammenhang mit der Anzahl der in den Polymeren eingebauten Redox-Gruppen stehen, ist es vorteilhaft, erfindungsgemäß solche elektrisch leitfähigen Polymeren zu verwenden, die eine möglichst große Anzahl der definierten Redox-Gruppen eingebaut enthalten.

Eine Gruppe von sehr geeigneten erfindungsgemäß einzusetzenden Redox-Polymeren sind beispielsweise die elektrisch leitfähigen Polymeren mit seitenständigen Redox-Gruppen, die eine ungesättigte Polymerhauptkette mit konjugierten Doppelbindungen entlang der Polymerhauptkette aufweisen. Diese konjugierten Polymeren mit seitenständigen Redox-Gruppen leiten sich beispielsweise von Polyphenylenen oder Heteropolyphenylenen, insbesondere aber von Acetylen-Polymerisaten ab und enthalten in der Polymerhauptkette vorzugsweise Polyen-Einheiten mit mindestens sieben, insbesondere mindestens 15 konjugierten C-C-Doppelbindungen. Zur Erzielung der geforderten elektrischen Leitfähigkeit können diese konjugierten Polymeren in an sich bekannter Weise mit den üblichen Dotierungsmitteln p- oder n-dotiert werden (vgl. z.B. US-PS 4 204 216, US-PS 4 222 903, EP-A1-16305). Für die p-Dotierung kommen die bekannten Elektronenakzeptoren, wie z.B. $AsF_5$, $SbF_5$, $SbCl_5$, $PF_5$+NOF, $PCl_5+Cl_2$, $AlCl_3+Cl_2$, HF, $HNO_3$, $H_2SO_4$ und dgl., in Betracht; Beispiele für n-Dotierungsmittel sind die Elektronendonatoren, wie Li, Na oder K. Die Dotierung der konjugierten Polymere mit den seitenständigen Redox-Gruppen kann auch durch elektrochemische Oxidation oder Reduktion unter gleichzeitiger Einlagerung von Dotierungsionen, wie z.B. $PF_6^-$, $AsF_6^-$, $SbF_6^-$, $BF_4^-$, $SbCl_6^-$, Sulfonsäure-Anionen oder $Li^+$, $Na^+$, $K^+$, tertiären oder quaternären Ammonium-Ionen oder tertiären oder quaternären Phosphonium-Ionen, erfolgen (vgl. z.B. EP-A2-36118). Die Herstellung dieser Redox-Polymeren mit den seitenständigen Redox-Gruppen kann beispielsweise erfolgen durch Polymerisation von Redox-Gruppen enthaltenden Acetylen-Monomeren oder durch Umsetzung von konjugierten Polymeren mit Redox-Verbindungen, beispielsweise über eine Wittig-Reaktion oder analog den Umsetzungen von Redox-Verbindungen mit Vinyl-Polymeren.

Aus dieser Gruppe der Redox-Polymere haben sich diejenigen besonders bewährt, deren seitenständige Redox-Gruppen chinoide Strukturen auszubilden vermögen. Als seitenständige chinoide Redox-Gruppen kommen dabei neben z.B. den Benzo(hydro)chinonen, Naphtho(hydro)chinonen, Anthra(hydro)-chinonen und deren Derivaten in sehr vorteilhafter Weise der gegebenenfalls substituierte Phenalen-Rest, der Indigo-Rest oder Indigo-Analoge in Betracht. Insbesondere sind hierbei als Redox-Gruppen die 1,9-disubstituierten Phenalene günstig.

Als Vertreter der Gruppe der elektrisch leitfähigen Redox-Polymere mit seitenständigen Redox-Gruppen seien die konjugierten Polymeren genannt, die Strukturelemente der allgemeinen Formel (I)

$$-(\underset{\underset{(Redox)}{\mid}}{\underset{X}{\underset{\mid}{C}}}=CR^1)_m\ (CR^2=CR^3)-_n \qquad (I)$$

enthalten und die, wie oben erwähnt, zur Erzielung einer elektrischen Leitfähigkeit von größer als $10^{-2}$ $Ohm^{-1}$ $cm^{-1}$ mit den üblichen Dotierungsmitteln p- oder n-dotiert sind.

In der allgemeinen Formel (I) bedeuten

$R^1$: H, $C_1$-$C_5$-Alkyl, $C_6$-$C_{12}$-Cycloalkyl oder $C_6$-$C_{12}$-Aryl, insbesondere H;

$R^2$, $R^3$: H, $C_1$-$C_5$-Alkyl, $C_2$-$C_4$-Alkenyl, $C_6$-$C_{12}$-Cycloalkyl oder $C_6$-$C_{12}$-Aryl, wobei $R^2$ und $R^3$ gleich oder verschieden sein können, oder $R^3$ und $R^4$ cyclisch, beispielsweise über einen Alkylenrest, miteinander verknüpft, insbesondere $R^2$ und $R^3$ beide H oder einer dieser Reste H und der andere $C_1$-$C_5$-Alkyl oder $C_2$-$C_4$-Alkenyl;

X: eine direkte chemische Bindung, $C_1$-$C_5$-Alkylen, $C_2$-$C_5$-Alkyliden, $C_1$-$C_5$-Alkylidin, $C_2$-$C_5$-Alkenylen, $C_6$-$C_{12}$-Cycloalkylen oder $C_6$-$C_{12}$-Arylen, insbesondere eine direkte chemische Bindung, $-CH_2-$, $-CH=$ oder $-CH=CH-$;

(Redox): einen, insbesondere chinoide Strukturen ausbildenden, organischen Rest, der in mindestens zwei stabilen, vorzugsweise reversibel ineinander umwandelbaren Oxidationsstufen vorliegen kann, insbesondere ein N-, O-, S-, P- und/oder $\pi$-System, wobei für den Fall X = $C_1$-$C_5$-Alkylidin (insbesondere $-CH=$) oder $C_2$-$C_5$-Alkenylen (insbesondere $-CH=CH-$) der Rest X auch in das Redox-System mit einbezogen sein kann;

m: eine Zahl von 1 bis 500;

n: eine Zahl von 0 bis 500, mit der Maßgabe, daß die Summe von (m+n) 7 bis 1000 beträgt.

Beispiele für den Redox-Rest in den Strukturelementen der allgemeinen Formel (I) sind der ggf. substituierte Benzochinonrest, der ggf. substituierte Naphthochinonrest, der ggf. substituierte Anthrachinonrest, der Phenalen-Rest, insbesondere Reste, die sich von 1,9-disubstituierten Phenalenen ableiten, sowie heterocyclische Redox-Gruppen, wie beispielsweise Phenothiazin-Derivate und der Indigo-Rest. Wegen der Vielfalt der möglichen Redox-Gruppen sei zum Beispiel auf K. Deuchert und S. Hünig, Ang. Chemie, 90 (1978), Seiten 927 bis 938 verwiesen.

Zu den Polymeren mit den Strukturelementen der Formel (I) kommt man nach einem Verfahren, bei dem man Redox-Gruppen enthaltende Alkine, gegebenenfalls zusammen mit anderen Alkinen, insbesondere Acetylen, mit den üblichen Übergangsmetallkatalysatoren, z.B. Ziegler-Natta-Katalysatoren, polymerisiert. Ein solches Verfahren ist für die Herstellung von Phenalen-substituierten Polyenen in der älteren deutschen Patentanmeldung P 32 32 483.9 (DE-OS ) beschrieben und führt beispielsweise zu den vorteilhaften Redox-Polymeren mit Strukturelementen der allgemeinen Formeln (II) und (III)

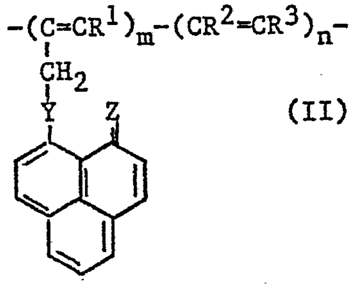 (II)

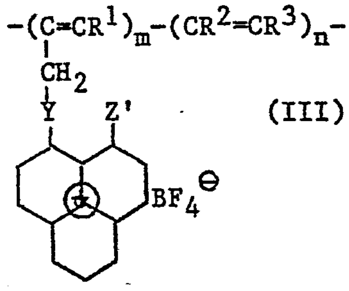 (III)

worin $R^1$, $R^2$, $R^3$, m und n die weiter oben bei der allgemeinen Formel (I) angegebene Bedeutung haben; Y eine direkte chemische Bindung darstellt oder $-NR-$, $-O-$, $-S-$, $-O-(CH_2)_p-O-$, $-O-(CH_2)_p-NR-$, $-NR-(CH_2)_p-NR-$, $-S-(CH_2)_p-O-$, $-S-(CH_2)_p-NR-$ oder $-S-(CH_2)_p-S-$ [mit R = H, $C_1$-$C_5$-Alkyl, $C_6$-$C_{12}$-Cycloalkyl, $C_7$-$C_{14}$-Aralkyl und p = eine Zahl 1 bis 5], insbesondere $-NR-$, $-O-$ oder $-S-$ ist; Z bedeutet O, NR, S, Se, Te [mit R=H, $C_1$-$C_5$-Alkyl, $C_6$-$C_{12}$-Cycloalkyl oder $C_7$-$C_{14}$-Aralkyl], insbesondere O, NR oder S; und Z' bedeutet $-OR$, $-SR$ oder $-NR_2$ [mit R=H, $C_1$-$C_5$-Alkyl, $C_6$-$C_{12}$-Cycloalkyl oder $C_7$-$C_{14}$-Aralkyl, wobei in der Gruppe $-NR_2$ die beiden Reste R auch cyclisch miteinander verbunden sein können; insbesondere R=H oder $C_1$-$C_5$-Alkyl oder Benzyl]. Ein typischer Vertreter dieser Klasse von Polymeren ist das Poly[3-(phenalen-1'-on-9'-yl)-aminopropin-(1)]. In gleicher Weise kommt man zu Polyenen mit anderen der oben genannten Redox-Gruppen, wenn man, in analoger Weise wie in der DE-OS 32 32 483 beschrieben, andere Redox-Gruppen enthaltende Alkine herstellt und polymerisiert.

Zu Polymeren mit Strukturelementen der allgemeinen Formel (I) kommt man bei größtmöglicher Vielfalt der Ausgangskomponenten auch, wenn man Polyene mit reaktionsfähigen Substituenten oder Seitengruppen in geeigneter Weise mit entsprechenden Redox-Verbindungen umsetzt. Als sehr geeignet hat sich hierfür beispielsweise die Umsetzung von Halogengruppen tragenden Polyenen, insbesondere Polyacetylen, mit Triphenylphosphin zu den Phosphoniumyliden der Polyene und weitere Umsetzung dieser Polyen-Phosphoniumylide im Sinne der Wittig-Reaktion mit Aldehyd-Gruppen oder Ketogruppen von Redox-Verbindungen erwiesen. Ausgehend vom Poly(propargylchlorid) erhält man so beispielsweise Redox-Polymere mit wiederkehrenden Einheiten der allgemeinen Formel (IV)

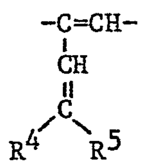 (IV)

Setzt man die Phosphoniumylide der Polyene mit Aldehyden um, so ist in der allgemeinen Formel (IV) $R^4$ ein Wasserstoffatom und $R^5$ eine Redox-Gruppe der oben beschriebenen Art. Setzt man die Phosphoniumylide der

Polyene mit Ketonen um, so ist in der allgemeinen Formel (IV) entweder $R^4$ ein Kohlenwasserstoffrest, insbesondere ein niederer Alkylrest (z.B. Methyl), und $R^5$ eine Redox-Gruppe der oben beschriebenen Art (beispielsweise ein aromatischer Chinon-Rest) oder $R^4$ und $R^5$ bilden zusammen ein cyclisches, insbesondere poly- und/oder heterocyclisches, Redox-System der oben beschriebenen Art (z.B. den Phenalen-Rest).

Beispielhaft seien als Vertreter dieser Gruppe von Redox-Polymeren solche mit wiederkehrenden Einheiten der nachstehenden Formeln (IVa) bis (IVc) genannt

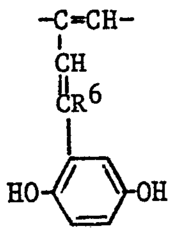

(IVa)

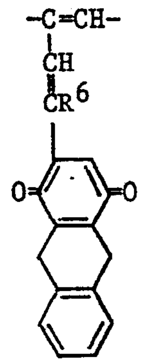

(IVb)

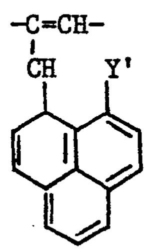

(IVc)

wobei in den Formeln (IVa) und (IVb) $R^6$ = H oder $CH_3$ ist; und in der Formel (IVc) Y' = Halogen, -OR, $-NR_2$ oder -SR [mit R = H, $C_1$-$C_5$-Alkyl, $C_6$-$C_{12}$-Cycloalkyl oder $C_7$-$C_{14}$-Aralkyl, wobei in der Gruppe $NR_2$ die beiden Reste R gleich oder verschieden sein können], insbesondere Cl, -OR, $-NR_2$ oder -SR [mit R = H, $CH_3$ oder $C_2H_5$] bedeuten.

Neben den elektrisch leitfähigen Redox-Polymeren mit den seitenständigen Redox-Gruppen sind erfindungsgemäß auch die elektrisch leitfähigen Polymeren besonders gut geeignet, die die Redox-Gruppen bzw. Redox-Systeme in der Hauptkette eingebaut enthalten. Derartige elektrisch leitfähige Redox-Polymeren, die vorzugsweise polykonjugiert sind und $\pi$-Elektronen im ganzen Makromolekül delokalisiert enthalten, sind als solche bekannt und in der Literatur beschrieben.

Zu dieser Klasse von Redox-Polymeren gehören beispielsweise die Polyaminochinone, wie sie erhalten werden durch Polykondensation von aromatischen Diaminen, insbesondere p-Phenylendiamin, mit Chinonen wie beispielsweise Benzochinon. Für den erfindungsgemäßen Einsatz sehr gut geeignete Redox-Polymeren sind auch die Poly(chinonimine) und Poly(chinondiimine), wie

sie beispielsweise durch oxidative Kupplung von aromatischen Mono-, Di- und/oder Polyaminen erhalten werden können. Als bevorzugter Vertreter dieser Klasse von Redox-Polymeren sei das Anilinschwarz genannt.

Zu den bevorzugten Polymeren, die die Redox-Gruppen in der Polymerkette eingebaut enthalten, gehören auch Poly(heteroaromaten), wie sie beispielsweise durch die allgemeinen Formeln (V) und (VI) wiedergegeben sind.

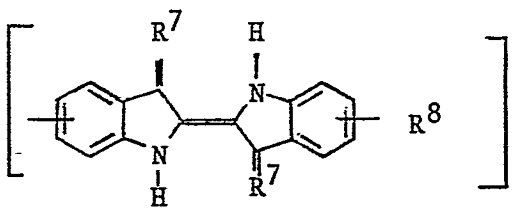
q (V)

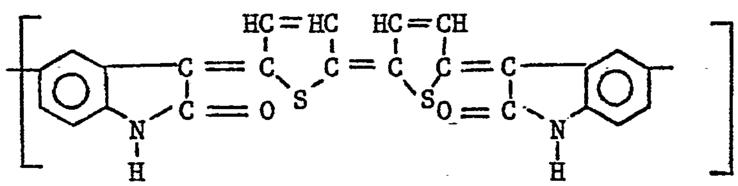
q (VI)

In den Formeln (V) und (VI) bedeuten

$R^7$: O, S, Se, SO oder $SO_2$, insbesondere O oder S;

$R^8$: -O-, -S-, -NH-, $-CH_2-$, -C(O)- oder $-C_6H_4-$;

q: eine Zahl gleich oder größer 2, insbesondere von 5 bis 500.

Polymeren der allgemeinen Formel (V) sowie ihre Herstellung sind in der EP-A1-45366 beschrieben; bezüglich der Herstellung der Polymere der allgemeinen Formel (VI) sei auf J. Pol. Sci., Polymer Letters, Vol. 4 (1966), Seiten 1023 bis 1028 verwiesen.

Die Polymeren der allgemeinen Formeln (V) und (VI) gehören dabei zu einer sehr geeigneten Klasse von Redox-Polymeren, die wiederkehrende Einheiten der allgemeinen Formel (VII)

$$\left[ (\text{Redox})_r - (X^1{=}X^2)_s - (\text{Redox}) - Y^1 \right] \qquad \text{(VII)}$$

enthalten, worin bedeuten

$X^1$, $X^2$: CH, N oder ein Ringatom eines zusammen mit der oder den (Redox)-Gruppen gebildeten (poly)cyclischen $\pi$-Systems, wobei $X^1$ und $X^2$ gleich oder verschieden sein können mit der Maßgabe, daß $X^1$ und $X^2$ verschieden sind, wenn $X^1$ oder $X^2$ gleich N ist;

$Y^1$: eine direkte chemische Bindung, $C_1$-$C_5$-Alkylen, $C_2$-$C_5$-Alkyliden, $C_1$-$C_5$-Alkylidin, $C_2$-$C_5$-Alkenylen, $C_6$-$C_{12}$-Cycloalkylen, $C_6$-$C_{12}$-Arylen, Alkylenarylen, -C(O)-, -O-, -S- oder -NH-, insbesondere eine direkte chemische Bindung, $-CH_2-$, -CH=, -CH=CH-, Phenylen, -O-, -S- oder -NH-;

(Redox): einen, insbesondere chinoide Strukturen ausbildenden, organischen Rest, der in mindestens zwei stabilen, vorzugsweise reversibel ineinander umwandelbaren Oxidationsstufen vorliegen kann, insbesondere ein N-, O-, S-, P- oder $\pi$-System, wobei $X^1$ und/oder $X^2$ in (poly)cyclische Redox-Systeme, insbesondere $\pi$-Systeme mit einbezogen sein können;

: Null oder 1;

s: eine Zahl von 1 bis 100, vorzugsweise von 1 bis 10.

Beispiele für die Redox-Gruppen in der allgemeinen Formel (VII) sind neben den in den allgemeinen Formeln (V) und (VI) dargestellten Gruppen beispielsweise aromatische Systeme, alkylaromatische Systeme, Alkylamine, heteroaromatische Systeme und Ringsysteme, in denen die Gruppe $-(X^1=X^2)_s-$ auch ganz oder teilweise in einem Ringsystem mit eingebaut sein kann. Zur Vielfalt der möglichen Gestaltungsformen der (Redox)-Gruppen und damit auch der Polymeren der allgemeinen Formel (VII) sei auf die oben zitierte Veröffentlichung von K. Deuchert und S. Hünig in "Angewandte Chemie" verwiesen, in der an Hand der analogen niedermolekularen Redox-Verbindungen eine große Zahl von Strukturen und Systemen für die Redox-Gruppen beschrieben ist. Die Redox-Polymeren der allgemeinen Formel (VII) können dabei analog den von K. Deuchert und S. Hünig beschriebenen Redox-Systemen synthetisiert werden oder auch aus diesen, beispielsweise durch oxidative Kupplung oder chemische Umsetzung, erhalten werden.

Die polykonjugierten Polymeren, die die Redox-Gruppen in der Polymer-Hauptkette eingebaut enthalten, sind häufig bereits schon als solche elektrisch leitfähig, wie z.B. Anilinschwarz oder die Polymeren der allgemeinen Formel (VII), was für den erfindungsgemäßen Einsatz als aktives Elektrodenmaterial in den Batterien im allgemeinen sehr vorteilhaft ist. Nötigenfalls, d.h. wenn diese Redox-Polymeren eine elektrische Leitfähigkeit unter $10^{-2}$ $Ohm^{-1}$ $cm^{-1}$ besitzen bzw. wenn ihre Leitfähigkeit noch

gesteigert werden soll, können die Polymeren mit den in der Hauptkette eingebauten Redox-Gruppen mit den üblichen und an sich bekannten Dotierungsmitteln auch p- oder n-dotiert werden, wie es beispielsweise in der EP-A1-45366 für die Polyheteroaromaten der allgemeinen Formel (V) beschrieben ist. Als Dotierungsmittel kommen die weiter oben genannten Elektronenakzeptoren oder Elektronendonatoren, einschließlich der ionischen Dotierungsmittel in Betracht.

Die elektrisch leitfähigen Redox-Polymeren können erfindungsgemäß in jeder beliebigen, geeigneten Form als aktives Elektrodenmaterial der Batterien oder elektrochemischen Speicher eingesetzt werden. Beispielsweise ist es möglich, die Redox-Polymeren in Form von selbsttragenden Filmen oder Folien oder von geschäumten offenzelligen Formkörpern oder Schaumstoffen zu verwenden. Dies empfiehlt sich insbesondere dann, wenn die Redox-Polymeren stabile, feste, selbsttragende Filme oder Folien zu bilden vermögen.

Gleichermaßen können die Redox-Polymeren zum Einsatz als Elektrodenmaterial in den Batterien oder elektrochemischen Speichern auf ein Substrat aufgebracht werden, beispielsweise indem man Filme oder Folien der Redox-Polymeren auf das Substrat auflaminiert oder aufkaschiert oder indem man beispielsweise das Substrat mit den Redox-Polymeren pulverbeschichtet. Als Substrat können dabei einerseits inerte, indifferente Trägermaterialien dienen, z.B. Filme oder Folien aus üblichen, unter den Betriebsbedingungen der Batterie stabilen Polymeren, insbesondere auch Gewebe, Vliese etc. aus organischen oder anorganischen, elektrisch nicht leitenden Materialien, z.B. Vliese aus Glaswolle oder dgl., die gleichzeitig als Separatoren oder Diaphragmen dienen können. Es können aber auch elektrisch leitfähige Substrate verwendet werden, wie z.B. Bleche oder Folien aus Metallen, beispielsweise Platin, Palladium, Gold, Silber, Tantal oder Edelstahl, oder Filme oder Folien aus den bekannten elektrisch leitfähigen konjugierten Polymeren, beispielsweise dotiertem Polyacetylen oder insbesondere Polypyrrol. Wenn die Redox-Polymeren auf einem elektrisch leitfähigen Substrat aufgebracht sind, kann dieses z.B. gleichzeitig als Stromzu- bzw. -ableiter zu bzw. von der Elektrode dienen.

Ferner können die elektrisch leitfähigen Redox-Polymeren zur Herstellung der Elektroden in Form von gesinterten oder verpreßten Pulvern, beispielsweise als Sinter- oder Preßplättchen, eingesetzt werden. Bei der Herstellung von Preß- oder Sinterelektroden können die hierbei üblichen und gebräuchlichen Zusatzstoffe mitverwendet werden, wie z.B. Bindemittel, Pigmente, Ruß, inerte Metalle oder Träger- oder Matrixmaterialien, wie z.B. andere polymere Stoffe. Diese Zusatzstoffe sind in den erfindungsgemäßen Elektrodenmaterialien im allgemeinen in Mengen unter 50 Gew.-%, bezogen auf das gesamte Elektrodenmaterial, enthalten, wobei für die Elektrodenherstellung erfindungsgemäß vorzugsweise ohne diese Zusatzstoffe gearbeitet wird. Es ist auch möglich, die Redox-Polymeren in Netz- oder Korbelektroden einzusetzen.

In den Batterien oder elektrochemischen Speichern können die elektrisch leitfähigen Redox-Polymeren erfindungsgemäß das aktive Elektrodenmaterial der Kathode und/oder der Anode darstellen.

Wenn das aktive Material der Kathode aus einem Redox-Polymeren der in Rede stehenden Art gebildet wird, kann als Anode jedes geeignete und an sich bekannte Anodenmaterial eingesetzt werden, welches ein höheres Oxidationspotential als die Kathode hat. Vorzugsweise besteht die Anode in diesem Fall aus einem elektropositiven Metall mit einer Pauling-Elektronegativität von nicht mehr als 1, insbesondere Cäsium, Rubidium, Kalium, Natrium, Barium, Kalzium oder Legierungen dieser Metalle. Vorzugsweise werden in diesem Fall als Anode jedoch Lithium oder Lithium-Legierungen verwendet. Als Anoden-Material können dabei auch n-dotierte konjugierte Polymere, z.B. mit Lithium-, Natrium-, tertiären oder quaternären Ammonium- oder tertiären oder quaternären Phosphoniumionen dotiertes Polyacetylen, eingesetzt werden.

Wenn das aktive Material der Anode aus einem elektrisch leitfähigen Redox--Polymeren der in Rede stehenden Art gebildet wird, kann die Kathode aus jedem geeigneten und an sich bekannten Kathodenmaterial bestehen. Hierfür kommen insbesondere Metalle in Betracht, deren Oxidationspotential unter dem des für das anodenaktive Material verwendeten Redox-Polymeren liegt. Metalle, die sich in diesem Fall bevorzugt als Kathoden-Material eignen, sind z.B. Platin, Palladium, Gold, Silber, Nickel, Titan und dgl. Als Kathode kann aber auch z.B. eine Kohlenstoffelektrode verwendet werden oder auch ein p-dotiertes konjugiertes Polymeres, wie z.B. mit $AsF_5$, $SbF_5$, $SbCl_5$, $PF_6^-$, $BF_4^-$ oder $ClO_4^-$ dotiertes Polyacetylen oder Polypyrrol. Der Einsatz von n- oder p-dotierten konjugierten Polymeren als Gegenelektrode empfiehlt sich insbesondere dann, wenn es sich bei den erfindungsgemäßen Batterien um Primärelemente handelt. Bei Sekundärelementen werden als Gegenelektrode die genannten Metall- oder Kohlenstoff--Elektroden bevorzugt.

In den erfindungsgemäßen Batterien oder elektrochemischen Speichern können auch das aktive Material der Kathode und der Anode aus den elektrisch leitfähigen Redox-Polymeren gebildet werden, wobei die Oxidationsstufe des kathodenaktiven Redox-Polymeren höher ist als die des anodenaktiven.

In diesem Fall hat es sich als besonders günstig herausgestellt, wenn das anodenaktive Material und das kathodenaktive Material aus verschiedenen Redox-Polymeren bestehen.

Die erfindungsgemäßen Batterien oder elektrochemischen Speicher enthalten ferner ein Medium, insbesondere einen Elektrolyt, das bzw. der bei Betrieb der Batterie zum Stromtransport innerhalb der Batterie oder des elektrochemischen Speichers befähigt ist. Im Fall von Sekundär-Elementen muß der Elektrolyt darüber hinaus so beschaffen sein, daß die reversible Umwandlung der Redox-Polymeren gewährleistet ist, ohne daß hierdurch Elektrodenmaterial oder Elektrolyt irreversibel dem Batteriesystem entzogen werden. Normalerweise, insbesondere bei Sekundär-Elementen, handelt es sich bei dem Elektrolyt um eine Lösung von einem Leitsalz in einem Elektrolyt-Lösungsmittel. Im Fall von Primär-Elementen können jedoch auch Feststoff-Elektrolyten verwendet werden. Das verwendete Elektrolyt-System hängt auch wesentlich von den verwendeten Elektrodenmaterialien ab und ist auf diese sowie auf die Funktion der Batterie oder des elektrochemischen Speichers abzustellen.

Als Elektrolyt-Systeme können - unter den genannten Voraussetzungen - die an sich bekannten und üblichen Elektrolyt-Systeme verwendet werden. Als Leitsalze für das Elektrolyt-System eignen sich insbesondere Perchlorate, Tetrafluoroborate, Hexafluoroarsenate, Hexafluoroantimonate und Hexafluorophosphate. Des weiteren gut geeignet sind Salze von Sulfonsäuren, beispielsweise von gegebenenfalls mit Alkyl- und/oder Nitrogruppen substituierten aromatischen Sulfonsäuren, insbesondere Benzolsulfonate oder Tosylate, aber auch Fluorosulfonate, wie z.B. Trifluormethansulfonat. Als Kation für die Leitsalze kommen insbesondere die Alkalimetall-Kationen, vorzugsweise $Li^+$, $Na^+$ oder $K^+$, in Betracht. Weitere sehr geeignete Kationen für die Leitsalze sind aber auch die tert. oder quaternären Ammonium- bzw. Phosphonium-Kationen, beispielsweise das Tetramethylammonium-, Tetraethylammonium-, Tri-n-butylammonium-, Triphenylphosphonium-, Tri-n-butylphosphonium- oder Tetra-n-butylphosphonium-Kation. Wenn die Anode in den erfindungsgemäßen Batterien oder elektrochemischen Speichern aus einem Metall mit hohem Oxidationspotential, insbesondere einem Alkalimetall besteht, ist vorzugsweise, insbesondere im Fall von Sekundär-Elementen, das Leitsalz ein Salz des die Anode bildenden Metalls. Beispiele für geeignete und bevorzugte Leitsalze sind Lithiumperchlorat, Natriumperchlorat, Tetrabutylammoniumperchlorat, Lithiumtetrafluoroborat, Natriumtetrafluoroborat, Lithiumhexafluoroarsenat, Lithiumhexafluoroantimonat, Lithiumhexafluorophosphat, Tetraethylammonium-hexafluorophosphat, Tetramethylammonium-hexafluorophosphat, Triphenylphosphonium-tetrafluoroborat oder Tributylammonium-benzolsulfonat.

Die Leitsalze können sowohl als Feststoff-Elektrolyt in Primär-Elementen dienen als auch in Elektrolyt-Lösungen eingesetzt werden. Im letztgenannten Fall soll die Löslichkeit der Leitsalze in dem Elektrolyt-Lösungsmittel so groß wie möglich sein. Zweckmäßigerweise liegt die Konzentration des Leitsalzes in der Elektrolyt-Lösung im Bereich von etwa 0,01 bis etwa 2,0 Mol pro Liter Elektrolyt-Lösungsmittel.

Das Elektrolyt-Lösungsmittel soll im wesentlichen inert gegenüber Kathode und Anode und stabil gegenüber elektrochemischer Zersetzung sein. Als Elektrolytlösungsmittel kommen beispielsweise Ether (z.B. Ethylenglykoldimethylether oder Diethylenglykoldimethylether), cyclische Ether (z.B. Tetrahydrofuran, 2-Methyl-, 3-Methyl-, 2,5-Dimethyl-, 2,5-Dimethoxy-tetrahydrofuran, 1,3-Dioxolan oder Dioxan), organische Carbonate (z.B. Propylencarbonat), Ester (z.B. Methylacetat) Lactone oder Lactame (z.B. γ-Butyrolacton, α-Methyl-γ-butyrolacton oder 1-Methyl-2-pyrrolidinon), Nitrile oder Amide (z.B. Acetonitril oder Dimethylformamid) oder organische Sulfone, Sulfoxide oder Sulfite (z.B. Sulfolan, 3-Methyl-sulfolan, Ethylensulfit, Dimethylsulfit oder Dimethylsulfoxid) in Betracht. Ein besonderer Vorteil der erfindungsgemäßen Batterien oder elektrochemischen Speicher liegt darin, daß auch wäßrige Elektrolyt-Systeme eingesetzt werden können. So ist es beispielsweise möglich, Wasser oder Mischungen von Wasser mit organischen Lösungsmitteln, z.B. Alkoholen, Acetonitril oder dergleichen, als Elektrolyt-Lösungsmittel einzusetzen. Günstig sind auch Elektrolyt-Systeme, die wäßrige Flußsäure enthalten. Die Wahl des jeweils geeigneten Elektrolyt-Systems richtet sich - wie bereits erwähnt - vornehmlich nach dem verwendeten Elektrodenmaterial.

Die erfindungsgemäßen Batterien oder elektrochemischen Speicher können in einer außerordentlich großen Vielfalt von Formen hergestellt werden. Aufgrund der erfindungsgemäß einzusetzenden Elektrodenmaterialien können insbesondere sehr leichte, dünne, als auch flexible Batterien beliebiger Größe hergestellt werden. In den erfindungsgemäßen Batterien oder elektrochemischen Speichern können Anode und Kathode auch durch Diaphragmen oder Separatoren, wie z.B. Filterpapier, Glasfritten, poröse keramische Werkstoffe oder poröse bzw. semipermeable polymere Materialien voneinander getrennt sein. Bei Sekundär-Elementen kann der Zusammenbau der Batterien in geladenem oder ungeladenem Zustand erfolgen.

Die erfindungsgemäßen Batterien zeichnen sich neben ihrem geringen Gewicht, ihrer hohen Energie- und Leistungs-Dichte durch ihre große Stabilität, hohe Zyklisierbarkeit und geringe Selbstentladung aus. Die Eigenschaften der erfindungsgemäßen Sekundärelemente sind selbst nach einer

sehr hohen Anzahl von Wiederaufladevorgängen im wesentlichen unverändert und konstant.

Die Erfindung wird durch die nachfolgenden Beispiele erläutert.

Beispiele 1 bis 8

Unter Variation der in der Tabelle angegebenen anodenaktiven Materialien, kathodenaktiven Materialien und Elektrolyten wurden verschiedene Elemente gebaut, in dem die Kathode und die Anode in eine etwa 0,5-molare Lösung des Leitsalzes in einem Zellenkörper aus Polymethylmethacrylat eingetaucht wurden. Die Batterien wurden über einen Belastungswiderstand kontinuierlich entladen, wobei Ausgangsspannungen (Arbeitsspannung) zwischen 0,5 und 4,9 V und Stromstärken zwischen 10 und 100 mA gemessen wurden.

Auch nach wiederholter Wiederaufladung der erschöpften Elemente wurden die gleichen Ergebnisse erzielt.

Tabelle

| Beispiel Nr. | Anode | Kathode | Leitsalz |
|---|---|---|---|
| 1 | Lithium | Anilinschwarz | $Li^+ PF_6^-$ |
| 2 | Lithium | (V) mit $R^7$= O und $R^8$= p-$C_6H_4$- q $\sim$ 50 | $Li^+ ClO_4^-$ |
| 3 | Lithium | Polyindophenin (VI) q $\sim$20 | $Li^+ ClO_4^-$ |
| 4 | Lithium | (IVc) mit Y' = $-OCH_3$ $P_n > 15$ | $(Ethyl)_3NH^+AsF_6^-$ |
| 5 | Lithium | (II) mit Y= NH, Z= O, $R^1$= H, m $>$10, n = Null | $Li^+ BF_4^-$ |
| 6 | Natrium (aufgepreßt auf Al) | wie Beispiel 5 | $Na^+ BF_4^-$ |
| 7 | n-dotiertes Polyacetylen | wie Beispiel 5 | $(n\text{-}Butyl)_4N^+ SbF_6^-$ |
| 8 | (IVa) mit $R^6$= $CH_3$; $P_n \sim 50$ | p-dotiertes Polyacetylen (Dotierung mit $AsF_5$) | $Li^+ AsF_6^-$ |

Patentansprüche

1. Batterie oder elektrochemischer Speicher mit mindestens einer Kathode, einer Anode sowie einem Medium zum Stromtransport innerhalb der Batterie oder des elektrochemischen Speichers, dadurch gekennzeichnet, daß das aktive Elektrodenmaterial der Anode und/oder Kathode aus mindestens einem elektrisch leitfähigen Polymeren mit einer elektrischen Leitfähigkeit größer als $10^{-2}$ $Ohm^{-1}$ $cm^{-1}$ gebildet wird, welches elektrochemisch oxidierbare und/oder reduzierbare Redox-Gruppen mit definierter Struktur eingebaut enthält, die mindestens zwei stabile und vorzugsweise reversibel ineinander überführbare Oxidationsstufen auszubilden vermögen.

2. Batterie oder elektrochemischer Speicher nach Anspruch 1, dadurch gekennzeichnet, daß das elektrisch leitfähige Redox-Polymere ein p- oder n-dotiertes Polyen ist, welches die Redox-Gruppen als Seitengruppen an der Polymerhauptkette gebunden enthält.

3. Batterie oder elektrochemischer Speicher nach Anspruch 2, dadurch gekennzeichnet, daß es sich bei den Redox-Gruppen um solche Gruppen handelt, die chinoide Strukturen auszubilden vermögen.

4. Batterie oder elektrochemischer Speicher nach Anspruch 3, dadurch gekennzeichnet, daß es sich bei den Redox-Gruppen um 1,9-disubstituierte Phenalene handelt.

5. Batterie oder elektrochemischer Speicher nach Anspruch 1, dadurch gekennzeichnet, daß das elektrisch leitfähige Redox-Polymere die Redox-Gruppen in der Polymerhauptkette eingebaut enthält.

6. Batterie oder elektrochemischer Speicher nach Anspruch 5, dadurch gekennzeichnet, daß es sich bei dem elektrisch leitfähigen Redox-Polymeren um ein Polymeres handelt, welches wiederkehrende Einheiten der allgemeinen Formel (VII)

$$\left[ (Redox)_r - (X^1{=}X^2)_s - (Redox) - Y^1 \right] \qquad (VII)$$

enthält, worin bedeuten

$X^1$, $X^2$: CH, N oder ein Ringatom eines zusammen mit der oder den (Redox)-Gruppen gebildeten cyclischen oder polycyclischen $\pi$-Systems, wobei $X^1$ und $X^2$ gleich oder verschieden sein können mit der Maßgabe, daß $X^1$ und $X^2$ verschieden sind, wenn $X^1$ oder $X^2$ gleich N ist;

$Y^1$: eine direkte chemische Bindung, $C_1$-$C_5$-Alkylen, $C_2$-$C_5$-Alkyliden, $C_1$-$C_5$-Alkylidin, $C_2$-$C_5$-Alkenylen, $C_6$-$C_{12}$-Cycloalkylen, $C_6$-$C_{12}$-Arylen, Alkylenarylen, -C(O)-, -O-, -S- oder -NH-;

(Redox): einen organischen Rest, der in mindestens zwei stabilen, vorzugsweise reversibel ineinander umwandelbaren Oxidationsstufen vorliegen kann, insbesondere ein N-, O-, S-, P- oder $\pi$-System, wobei $X^1$ und/oder $X^2$ in cyclische (Redox)-Gruppen mit einbezogen sein können;

r: Null oder 1;

s: eine Zahl von 1 bis 100, vorzugsweise 1 bis 10.

7. Batterie oder elektrochemischer Speicher nach Anspruch 5 oder 6, dadurch gekennzeichnet, daß das Redox-Polymere mit Elektronenakzeptoren p-dotiert oder mit Elektronendonatoren n-dotiert ist.

8. Batterie oder elektrochemischer Speicher nach einem der Ansprüche 5 bis 7, dadurch gekennzeichnet, daß es sich bei den Redoxpolymeren um Poly(chinonimine) oder Poly(chinondiimine), wie beispielsweise Anilinschwarz, handelt.

9. Batterie oder elektrochemischer Speicher nach einem der Ansprüche 5 bis 7, dadurch gekennzeichnet, daß es sich bei den Redoxpolymeren um Polyindigo, Analoge des Polyindigos oder Polyindophenine handelt.

10. Batterie oder elektrochemischer Speicher nach einem der Ansprüche 1 bis 9, dadurch gekennzeichnet, daß die elektrisch leitfähigen Redox-Polymeren in Form von selbsttragenden Filmen oder Folien eingesetzt werden.

11. Batterie oder elektrochemischer Speicher nach einem der Ansprüche 1 bis 9, dadurch gekennzeichnet, daß die elektrisch leitfähigen Redox-Polymeren auf ein elektrisch leitfähiges Substrat aufgebracht sind.

12. Batterie oder elektrochemischer Speicher nach einem der Ansprüche 1 bis 9, dadurch gekennzeichnet, daß die elektrisch leitfähigen Redox--Polymeren auf ein elektrisch nicht leitendes organisches oder anorganisches Substrat, insbesondere ein Gewebe oder ein Vlies, aufgebracht sind.

13. Batterie oder elektrochemischer Speicher nach einem der Ansprüche 1 bis 9, dadurch gekennzeichnet, daß die Redox-Polymeren in verpreßter oder gesinterter Form eingesetzt werden.

14. Batterie oder elektrochemischer Speicher nach Anspruch 13, dadurch gekennzeichnet, daß das Elektrodenmaterial neben dem oder den Redox--Polymeren in der Elektrodenherstellung übliche Zusatzstoffe enthält.

15. Batterie oder elektrochemischer Speicher nach einem der Ansprüche 1 bis 14, dadurch gekennzeichnet, daß das aktive Elektrodenmaterial der Kathode aus dem oder den Redox-Polymeren gebildet wird und die Anode aus einem Metall mit einer Pauling-Elektronegativität nicht größer als 1,0, insbesondere Lithium, besteht.

16. Batterie oder elektrochemischer Speicher nach einem der Ansprüche 1 bis 14, dadurch gekennzeichnet, daß das aktive Elektrodenmaterial der Anode aus dem oder den Redox-Polymeren gebildet wird und die Kathode aus einem Metall mit einem Halbwertspotential größer als dem des oder der Redox-Polymeren, insbesondere Gold, Platin, Paladium, Silber, Kupfer, Nickel oder Titan, besteht.

17. Batterie oder elektrochemischer Speicher nach einem der Ansprüche 1 bis 14, dadurch gekennzeichnet, daß das aktive Elektrodenmaterial der Anode und Kathode aus verschiedenen Redox-Polymeren gebildet wird.

18. Batterie oder elektrochemischer Speicher nach einem der Ansprüche 1 bis 17, dadurch gekennzeichnet, daß das Medium zum Stromtransport innerhalb der Batterie oder des elektrochemischen Speichers ein Feststoffelektrolyt oder eine Elektrolyt-Lösung ist.

19. Batterie oder elektrochemischer Speicher nach Anspruch 18, dadurch gekennzeichnet, daß der Elektrolyt ein Salz aus einem Kation aus der Gruppe $Li^+$, $Na^+$, $K^+$, $R_4N^+$ oder $R_4P^+$ (worin R Wasserstoff und/oder niedere Alkylreste, cycloaliphatische Reste oder aromatische Reste bedeuten) und einem Anion aus der Gruppe $BF_4^-$, $AsF_6^-$, $SbF_6^-$, $SbCl_6^-$, $PF_6^-$, $ClO_4^-$ oder Sulfonsäure-Anion darstellt bzw. enthält.

0111237

20. Batterie oder elektrochemischer Speicher nach einem der Ansprüche 18 oder 19, dadurch gekennzeichnet, daß sie ein wäßriges Elektrolyt--System enthalten.